# EUROPEAN PATENT APPLICATION

(11) **EP 3 694 204 A2**
(43) Date of publication of application: **12.08.2020**
(21) Application number: 20154539.9
(22) Date of filing: 30.01.2020
(51) Int. Cl.: H04N 7/14

(54) **METHODS FOR SHARING AUXILIARY STREAM ON A PHONE**

(30) Priority: 31.01.2019 CN 201910100290
(71) Applicant: Yealink (Xiamen) Network Technology Co., Ltd., Xiamen, Fujian 361009 (CN)
(72) Inventor: LI, Zhibin, Xiamen, Fujian 361009 (CN)
(74) Representative: Meyer, Thorsten

(57) **Abstract**

Disclosed herein is a method for sharing auxiliary stream on a phone, comprising: binding a first phone and a first terminal and binding a second phone and a second terminal; establishing an audio communication between the first phone and the second phone; sending a proxy request to the second phone upon receiving the session signaling that is sent from the first terminal by the first phone; sending a proxy information with the session signaling that is sent from the second terminal to the first phone upon receiving the proxy request that is sent from the first phone by the second phone; sending the session signaling that is sent from the second terminal to the first terminal upon receiving the proxy information with the session signaling that is sent from the second terminal, which is sent from the second phone, by the first phone, so as to achieve transmission of auxiliary stream between the first terminal and the second terminal. By using the method as disclosed herein, the auxiliary information of the terminal is transferred to the opposite end by the way of signaling proxy through binding the audio and video phones with the terminal, to achieve sharing of auxiliary stream on the audio and video phones that do not support auxiliary stream function.

## Description

### RELATED APPLICATIONS

This application claims priority to Chinese Application Number 201910100290.X, filed on January 31, 2019, which is herein incorporated by reference.

### FIELD OF THE DISCLOSURE

The present disclosure relates to a phone communication field, more particularly, to a method for sharing auxiliary stream on a phone.

### BACKGROUND OF THE DISCLOSURE

Currently, most of communication terminals that can support auxiliary stream are expensive, while audio phones with low price are not able to support functions associated with video. There are some limitations on common video terminals due to cost of hardware, and their performance cannot support high definition auxiliary stream function. In case of lack of auxiliary stream function, communication is not intuitive and does not meet the clients' requirements. The present invention provides a method for sharing auxiliary stream based on an audio and a video phones that do not support auxiliary stream function plus a soft-terminal, for the purpose of achieving maximum of communication efficiency based on minimal cost.

### SUMMARY OF THE DISCLOSURE

Provided herein is a method for sharing auxiliary stream on a phone, to solve the problem that audio and video phones that do not support auxiliary stream function fail to share auxiliary stream, thereby transmission of auxiliary stream information from terminals to opposite ends by the way of signaling proxy based on binding of audio and video phones and terminals and in turn achieving sharing of auxiliary stream on the audio and video phones that do not support auxiliary stream.

The method for sharing auxiliary stream on a phone as provided herein comprises:
binding a first phone and a first terminal and binding a second phone and a second terminal;
establishing audio communication between the first phone and the second phone;
sending a proxy request to the second phone upon receiving a session signaling that is sent from the first terminal by the first phone;
sending a proxy information with the session signaling that is sent from the second terminal to the first phone upon receiving the proxy request that is sent from the first phone by the second phone;
sending the session signaling that is sent from the second terminal to the first terminal upon receiving the proxy information with the session signaling that is sent from the second terminal, which is sent from the second phone, by the first phone, so as to achieve transmission of auxiliary stream between the first terminal and the second terminal.

In one embodiment, sending a proxy request to the second phone upon receiving a session signaling that is sent from the first terminal by the first phone comprises:
obtaining an address information of the first terminal itself to construct SDP and using INVITE signaling to send the SDP to the first phone;
sending the auxiliary stream SDP proxy of the first terminal to the second phone by the first phone via the session signaling.

In one embodiment, the session signaling used by the first phone includes an INFO signaling or an INVITE signaling.

In one embodiment, sending the auxiliary stream SDP proxy of the first terminal to the second phone by the first phone via the session signaling comprises: serving the audio address information in SDP as the address information of the first phone itself and serving the video address information as the address information of the first terminal when using INVITE proxy.

In one embodiment, sending a proxy information with the session signaling that is sent from the second terminal to the first phone upon receiving the proxy request that is sent from the first phone by the second phone comprises:
picking out the video SDP and packaging it within INVITE to initiate a calling signal toward the second terminal upon receiving the proxy request by the second phone;
obtaining an address information of the second terminal itself and sending 200 OK to the second phone;
sending the SDP proxy in 200 OK to the first phone by the second phone via session signaling.

In one embodiment, the session signaling used by the second phone includes an INFO signaling or an INVITE signaling.

In one embodiment, sending the session signaling that is sent from the second terminal to the first terminal upon receiving the proxy information with the session signaling that is sent from the second terminal, which is sent from the second phone, by the first phone comprises: sending SDP information to the first terminal in the form of 200 OK upon receiving the SDP information that is sent from the second phone by the first phone.

In one embodiment, the first phone may be an audio phone or a video phone, and the second phone may be an audio phone or a video phone.

Compared with the prior arts, the present invention achieves the following advantageous effect.

The auxiliary stream information of the terminal is transferred to the opposite end by the way of signaling proxy through binding the audio and video phones and the terminal, to solve the problem that audio and video phones that do not support auxiliary stream function fail to share auxiliary stream, thereby achieving sharing of auxiliary stream on the audio and video phones that do not support auxiliary stream.

### BRIEF DESCRIPTION OF THE DRAWINGS

Figure 1 is a flowchart diagram for illustrating method procedures as described herein.
Figure 2 is a schematic diagram for data interaction as described herein.
Figure 3 is a schematic diagram for timing sequence of the first instruction as described herein.
Figure 4 is a schematic diagram for timing sequence of the second instruction as described herein.

### DETAILED DESCRIPTION OF THE DISCLOSURE

Several aspects of the disclosure are described below in details by reference to appended drawings and specific embodiments. The skilled in the art should understand that the embodiments are set forth to provide an illustration, rather than limit the scope of the present disclosure. The scope of the present disclosure is limited by the appended claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise.

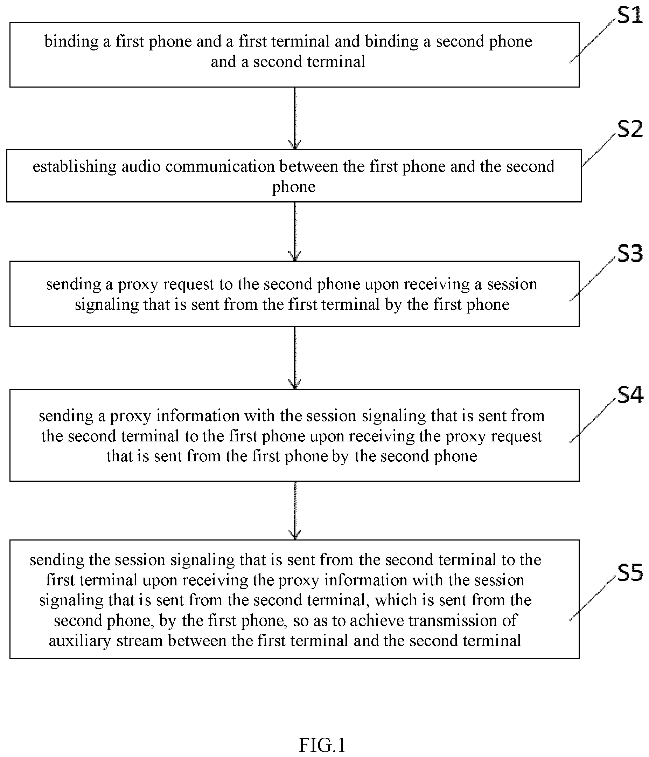

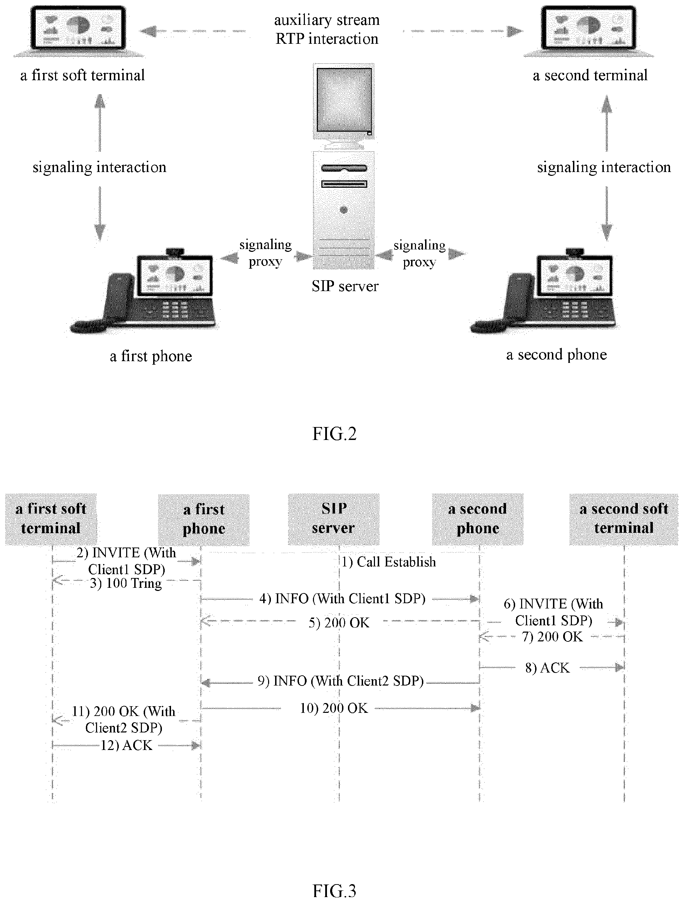

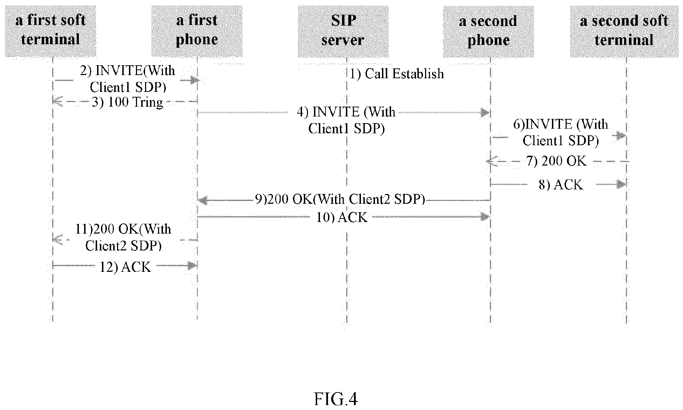

Referring to Figures 1 to 4, provided herein is a method for sharing auxiliary stream on a phone, comprising:
S1. binding a first phone and a first terminal and binding a second phone and a second terminal, wherein the binding can be achieved through sending a binding request to the phone via internet by a soft terminal and then confirming and authorizing the request on the phone, without any extra connection means, and wherein the necessary data interaction can be performed between the soft terminal and the phone;
S2. establishing an audio communication between the first phone and the second phone;
S3. sending a proxy request to the second phone upon receiving a session signaling that is sent from the first terminal by the first phone.

In this example, sending a proxy request to the second phone upon receiving a session signaling that is sent from the first terminal by the first phone comprises:
S31. obtaining an address information of the first terminal itself to establish SDP and sending SDP to the first phone by using INVITE signaling;
S32. sending an auxiliary stream SDP proxy of the first terminal to the second phone by the first phone via the session signaling.

In this example, the session signaling used by the first phone includes an INFO signaling or an INVITE signaling.

In this example, sending an auxiliary stream SDP proxy of the first terminal to the second phone by the first phone via the session signaling comprises: serving an audio address information in SDP as the address information of the first phone itself and serving a video address information in SDP as the address information of the first terminal when using INVITE proxy.

The method for sharing auxiliary stream on a phone as described in this example further comprises the following step:
S4. sending a proxy information with the session signaling that is sent from the second terminal to the first phone upon receiving the proxy request that is sent from the first phone by the second phone.

In this example, sending a proxy information with the session signaling that is sent from the second terminal to the first phone upon receiving the proxy request that is sent from the first phone by the second phone comprises:
S41. picking out a video SDP and packaging it in INVITE to initiate a calling signal toward the second terminal upon receiving the proxy request by the second phone;
S42. obtaining an address information of the second terminal itself and sending 200 OK to the second phone;
S43. sending SDP proxy in 200 OK to the first phone by the second phone via the session signaling.

In this example, the session signaling used by the second phone includes an INFO signaling or an INVITE signaling.

The method for sharing auxiliary stream on a phone as described in this example further comprises the following step:
S5. sending the session signaling that is sent from the second terminal to the first terminal upon receiving the proxy information with the session signaling that is sent from the second terminal, which is sent from the second phone, by the first phone, so as to achieve transmission of auxiliary stream between the first terminal and the second terminal.

In this example, sending the session signaling that is sent from the second terminal to the first terminal upon receiving the proxy information with the session signaling that is sent from the second terminal, which is sent from the second phone, by the first phone comprises: sending the SDP information to the first terminal in the form of 200 OK upon receiving the SDP information that is sent from the second phone by the first phone.

It should be understood that, the first phone may be an audio phone or a video phone and the second phone may be an audio phone or a video phone.

By using the method as provided herein, the address information of the auxiliary stream of the soft terminal is transferred to the opposite end by the way of signaling proxy based on binding of the audio and video phones and the soft terminal, so as to achieve P2P communication of the auxiliary stream. By using the method as provided herein, the following requirements are readily and conveniently satisfied without any extra cost in the case that the audio and video phones do not support auxiliary stream function:
1. remote training, particularly, PPT can be seen during training;
2. sharing files, particularly, files can be shared with the people at remote location for ease of starting discussion.

In the examples, if the phones used are video phones, the auxiliary stream can still be established by the soft terminal upon establishing video communication between two parties, so as to achieve advanced effect of the video phones. If the receiving party uses a video phone and the current communication is an audio communication, the receiving party could select to project the auxiliary stream to the phone or soft terminal when sending party initiates sharing of the auxiliary stream.

In sum, the method as provided herein can achieve the following advantages:
1. proxy of SDP by the way of INFO without influencing original audio communication; playing the auxiliary stream directly on the conventional video phone by using INVITE SDP proxy, both of which are combined to adapt for various scenarios;
2. achieving P2P communication if the soft terminal supports ICE, to ensure high quality of the auxiliary stream; and using server proxy for the auxiliary stream if the soft terminal cannot support ICE, to ensure normal communication of the auxiliary stream at the maximum extent;
3. simply binding of hard terminal and soft terminal merely by sending a request from the soft terminal and authorizing on the hard terminal;
4. merely installing a soft terminal on a PC that needs to share the auxiliary stream data with few cost, without adding extra hardware devices or connection cables;
5. not only suitable for audio phones, but also suitable for video phones which do not have auxiliary stream function.

The foregoing is provided for illustration, and does not intend to limit the present disclosure. Any changes and modifications for the above embodiments come within the scope of the present disclosure.

## Claims

1. A method for sharing auxiliary stream on a phone, comprising:
binding a first phone and a first terminal and binding a second phone and a second terminal;
establishing an audio communication between the first phone and the second phone;
sending a proxy request to the second phone upon receiving the session signaling that is sent from the first terminal by the first phone;
sending a proxy information with the session signaling that is sent from the second terminal to the first phone upon receiving the proxy request that is sent from the first phone by the second phone;
sending the session signaling that is sent from the second terminal to the first terminal upon receiving the proxy information with the session signaling that is sent from the second terminal, which is sent from the second phone, by the first phone, so as to achieve transmission of auxiliary stream between the first terminal and the second terminal.

2. The method of claim 1, wherein sending a proxy request to the second phone upon receiving the session signaling that is sent from the first terminal by the first phone comprises:
obtaining an address information of the first terminal itself to establish SDP which is sent to the first phone by using INVITE signaling;
sending the auxiliary stream SDP proxy of the first terminal to the second phone by the first phone via the session signaling.

3. The method of claim 2, wherein the session signaling used by the first phone includes an INFO signaling or an INVITE signaling.

4. The method of claim 3, wherein sending the auxiliary stream SDP proxy of the first terminal to the second phone by the first phone via the session signaling comprises: serving the audio address information in the SDP as the address information of the first phone itself and serving the video address as the address information of the first terminal when using INVITE proxy.

5. The method of claim 2, wherein sending a proxy information with the session signaling that is sent from the second terminal to the first phone upon receiving the proxy request that is sent from the first phone by the second phone comprises :
picking out a video SDP and packaging it in the INVITE to initiate a calling signal toward the second terminal upon receiving the proxy request by the second phone;
obtaining an address information of the second terminal itself and sending 200 OK to the second phone;
sending the SDP proxy in 200 OK to the first phone by the second phone via session signaling.

6. The method of claim 5, wherein the session signaling used by the second phone includes an INFO signaling or an INVITE signaling.

7. The method of claim 5, wherein sending the session signaling that is sent from the second terminal to the first terminal upon receiving the proxy information with the session signaling that is sent from the second terminal, which is sent from the second phone, by the first phone comprises:
sending the SDP information to the first terminal in the form of 200 OK upon receiving the SDP information that is sent from the second phone by the first phone.

8. The method of claim 1, wherein the first phone is an audio phone or a video phone, and the second phone is an audio phone or a video phone.
